# EUROPÄISCHE PATENTSCHRIFT

(11) **EP 2 479 096 B1**
(45) Veröffentlichungstag und Bekanntmachung des Hinweises auf die Patenterteilung: **24.04.2013**
(21) Anmeldenummer: 12151534.0
(22) Anmeldetag: 18.01.2012
(51) Int. Cl.: B62K 25/08, F16F 9/32, F16F 9/06, F16F 9/18, F16F 9/36

(54) **Teleskopfedergabelbein und damit versehene Teleskopfedergabel**
Telescopic suspension fork strut and telescopic suspension fork with same
Jambe de fourche à ressort télescopique et fourche à ressort télescopique en étant équipée

(30) Priorität: 21.01.2011 DE 102011000279; 21.01.2011 DE 102011000280
(43) Veröffentlichungstag der Anmeldung: 25.07.2012
(73) Patentinhaber: WP Performance Systems GmbH, 5222 Munderfing (AT)
(72) Erfinder: Wimmer, Johannes, 84556 Kastl (DE)
(74) Vertreter: Söllner, Udo

(56) Entgegenhaltungen:
- EP-A1- 2 017 495
- EP-A2- 1 666 348
- WO-A1-2008/085097
- JP-A- 2000 320 598
- JP-A- 2010 168 002
- JP-U- H 064 442
- US-A1- 2006 137 947
- US-B1- 6 234 505

## Beschreibung

Die vorliegende Erfindung betrifft ein Teleskopfedergabelbein mit einem Innenrohr und einem Außenrohr und einer Dämpfungseinrichtung sowie einer Federeinrichtung nach dem Oberbegriff des Anspruchs 1.

Das erfindungsgemäße Teleskopfedergabelbein kann beispielsweise zur Bildung einer Teleskopfedergabel oder auch kurz Telegabel eingesetzt werden, die an einem Motorrad oder beispielsweise auch einem Fahrrad Verwendung findet. Eine solche Telegabel erfüllt die Funktion der Führung eines Vorderrads des angesprochenen Fahrzeugs, übernimmt die Aufgabe der Federung und dient der Dämpfung, wenn sich das Fahrzeug über Fahrbahnunebenheiten bewegt, sorgt also dafür, dass die Federbewegung rasch wieder abklingt und bedient auch die Abstützung eines beim Abbremsen des Vorderrads als Reaktionsmoment aufgebauten Bremsmoments relativ zum Rahmen des Fahrzeugs.

Aufgrund der hohen, an eine Telegabel gestellten Anforderungen, besitzt ein zur Bildung der Telegabel herangezogenes Teleskopfedergabelbein eine Vielzahl von Funktionalitäten und Bauteilen, mit denen beispielsweise auf die Federeigenschaft und die Dämpfungseigenschaft des Teleskopfedergabelbeins Einfluss genommen werden kann.

Zur Herbeiführung einer Dämpfungsfunktion zur Dämpfung der oszillierenden Bewegung des Innenrohrs und Außenrohrs relativ zueinander weisen bekannte Dämpfungseinrichtungen Bohrungen auf, über die ein Dämpfungsfluid in der Form beispielsweise eines Telegabelöls hindurchströmen kann. Zur Herbeiführung einer auf die jeweilige Anforderung des Fahrers beziehungsweise als Reaktion auf die Beschaffenheit der Fahrbahnoberfläche erforderlichen Eigenschaft besitzt die Dämpfungseinrichtung ganz allgemein einstellbare Ventileinrichtungen, über die das Durchströmverhalten des Dämpfungsfluids eingestellt werden kann.

Wenn das Dämpfungsfluid durch die Bohrungen beziehungsweise Ventile strömt, kommt es lokal zur Ausbildung sehr hoher Drücke, die so groß sind, dass Luftblasen entstehen, es tritt Kavitation auf. Um die Bildung von Kavitation zu vermeiden, wird das Dämpfungsfluid unter hohen Druck gesetzt, so dass es gar nicht erst zur Ausbildung von Gasblasen kommen kann.

Anhand der WO 2008/085097 A1 ist eine Vorderradgabel für ein Zweiradfahrzeug bekannt geworden. Bei dieser bekannten Vorderradgabel ist ein Teleskopfedergabelbein vorgesehen, welches ein Innenrohr und ein Außenrohr und eine Dämpfungseinrichtung sowie eine Feder besitzt. Die Feder ist dabei in einem ersten Volumen O1 angeordnet, während die Dämpfungseinrichtung ein zweites Volumen 02 aufweist, die gegeneinander hermetisch abgedichtet sind. Die Dämpfungseinrichtung dieser bekannten Vorderradgabel besitzt zwei voneinander getrennte Fluidvolumina, die wahlweise mit einem Ausgleichsbehälter verbunden werden können. Bei dieser bekannten Vorderradgabel wird es als nachteilig angesehen, dass sich das Fluid in der ersten Kammer, die die Federeinrichtung aufnimmt, mit dem Fluid in der Dämpfungseinrichtung mischen kann, weshalb ein drittes Volumen vorgesehen ist, welches vorzugsweise mit Luft gefüllt ist, und einen direkten Kontakt zwischen dem ersten Volumen O1 und dem zweiten Volumen 02 vermeiden soll.

Anhand der JP 05263862 A ist eine Gasfeder bekannt geworden, die eine Dichtung aufweist, die einen größeren Durchmesser aufweist als eine Kolbenstange, an der die Dichtung angeordnet ist, um den Reibungswiderstand der Kolbenstange zu verringern.

Anhand der WO 2007/046750 A1 ist eine Vorderradgabel bekannt geworden, die eine Dämpfungseinrichtung nach dem so genannten Closed-Cartridge-Prinzip aufweist. Diese bekannte Vorderradgabel besitzt dabei eine im Innenrohr angeordnete Hauptfeder, die von einer Kolbenstange durchsetzt wird. An der Kolbenstange ist ein Dämpferkolben angeordnet, der in einem Innenrohr der Dämpfereinrichtung eine auf-und abgehende Bewegung ausführen kann. Dabei verdrängt er ein in der Dämpfungseinrichtung vorhandenes Dämpfungsfluid aus dem Innenraum des Innenrohrs über Durchlässe, die mit einem koaxial zum Innenraum des Dämpfungsrohrs angeordneten Ringraum verbunden sind, der wiederum in Fluidverbindung steht mit einer im Innenrohr der Dämpfungseinrichtung ausgebildeten Rückströmkammer, so dass sich sowohl die obere als auch die untere Kolbenfläche des Dämpfungskolbens mit dem Dämpfungsfluid in Kontakt befinden. Das Dämpfungsfluid wird bei der oszillierenden Bewegung des Dämpfungskolbens also von der Kompressionskammer in die Rückströmkammer gefördert, wobei in Abhängigkeit der Hubbewegung des Dämpfungskolbens die Kompressionskammer und die Rückströmkammer wechseln.

Ein solches, mit paralleler Dämpfung arbeitendes System besitzt den Vorteil, dass das Dämpfungsfluid ständig unter Druck steht und auf diese Weise Kavitation vermieden wird.

Bei einem, zur Bildung der bekannten Vorderradgabel verwendeten Teleskopfedergabelbein erstreckt sich die Kolbenstange durch einen Deckel der Dämpfungseinrichtung hindurch in diese hinein bis zu dem Kolben, der an der Kolbenstange befestigt ist. Bei der bekannten Vorderradgabel befindet sich die Luftkammer mit der Hauptfeder unterhalb der Dämpfungseinrichtung angeordnet. Um zu vermeiden, dass im ausgefederten Zustand Öl aus der Dämpfungseinrichtung in Richtung zur Luftkammer entweicht, ist es erforderlich, eine Dichtungseinrichtung im Bereich zwischen der Kolbenstange und dem Deckel der Dämpfungseinrichtung anzuordnen.

In dem Aufnahmeraum, in dem sich die Hauptfeder angeordnet befindet, ist sowohl Dämpfungsfluid, also Öl, als auch Luft vorhanden. Beim Einfedern der bekannten Vorderradgabel nimmt der Druck in der die Hauptfeder aufnehmenden Luftkammer deutlich zu und es kommt über den Ringspalt zwischen der Kolbenstange und dem Deckel der Dämpfungseinrichtung zum Eindringen eines aufgeschäumten Öl-Luft-Gemisches und damit zu dem Effekt, der gerade durch eine doppelt wirkende Dämpfung vermieden werden soll, nämlich zur Bildung von Kavitation.

Zudem führt das Eindringen von Öl aus der Luftkammer in die Dämpfungseinrichtung zu einem Ansteigen von Ölvolumen in der Dämpfungseinrichtung und daher dazu, dass der als Ausgleichseinrichtung vorgesehene externe Behälter mit dem darin vorgesehenen Kolben zur Vorspannung des Ölvolumens in der Dämpfungseinrichtung auf Block geht und damit sich das Antwortverhalten der bekannten Vorderradgabel wesentlich verschlechtert, da sie sich verhärtet und zudem die Gefahr einer Beschädigung besteht.

Anhand der US 2008/0230335 A1 ist eine Vorderradgabel bekannt geworden, die eine Dämpfungseinrichtung besitzt, die unterhalb einer oberen Ölkammer R1 angeordnet ist und bei der an der Kolbenstange eine Ausnehmung vorgesehen ist, über die im voll eingefederten Zustand der Vorderradgabel Öl aus der Dämpfungseinrichtung unter hohem Druck in Richtung zu einem Reservoir R3 strömen kann.

Diese bekannte Vorderradgabel weist daher den Nachteil auf, dass eine Fluidströmung aus der Dämpfungseinrichtung in Richtung zu einem Reservoir nur in einem hoch belasteten Zustand der Dämpfungseinrichtung stattfindet, nämlich dann, wenn die Vorderradgabel nahezu vollständig eingefedert ist. In Abhängigkeit von dem mit der bekannten Vorderradgabel ausgestatteten Fahrzeug zurückgelegten Fahrprofil kann dieser Zustand selten oder nie erreicht werden. Auch ist es möglich, dass in Abhängigkeit der Einstellung des Ansprechverhaltens der Dämpfungseinrichtung der Zustand der nahezu vollständigen Kontraktion der bekannten Vorderradgabel ebenfalls nie erreicht wird. Es führt dies zu einem Effekt mit positiver Rückkopplung, da das Ölvolumen in der Dämpfungseinrichtung ansteigt, das Ansprechverhalten der bekannten Vorderradgabel für den Fahrer spürbar härter wird und dadurch unkomfortabel. Dies führt üblicherweise dazu, dass ein Fahrer das Fahrzeug dann weniger dynamisch bewegt, die Einfederbewegung der bekannten Vorderradgabel damit abnimmt, sich die Dämpfungseinrichtung weiter mit Öl füllt und noch härter wird und daher genau der gegenteilige Effekt erreicht wird, nämlich ein Ansprechverhalten der Federgabel, die mit dem vom Fahrer gewohnten Ansprechverhalten nicht mehr vergleichbar ist.

Der Fahrer des Fahrzeugs wird dazu gezwungen, mit dem Fahrzeug nur über die Vorderradbremse beispielsweise eine Notbremsung herbeizuführen, um ein so tiefes Eintauchen der Vorderradgabel zu erreichen, dass ein Ölvolumenausgleich über die bekannte Vorderradgabel wieder erreicht werden kann. Es liegt in der Natur der Sache, dass dies kontraproduktiv ist und nicht mit dem Ziel vereinbar ist, dem Fahrer des Fahrzeugs ein Fahrzeug mit für ihn und sein normales Fahrverhalten gewohntem Federdämpfungsverhalten bereitzustellen.

Wird diese bekannte Vorderradgabel an einem Zweirad angebracht, welches auch zur Fahrt in unbefestigtem Gelände vorgesehen ist, so muss eine solche Vorderradgabel große Federwege von bis zu 300 mm und mehr besitzen, was dazu führt, dass eine über die normale Einfederbewegung weit hinausgehende, nahezu vollständige Kontraktion der Federgabel selten stattfindet und es daher bei einer Auslegung der Federgabel gemäß der vorstehend beschriebenen bekannten Federgabel zu einer deutlichen Veränderung des Ansprechverhaltens der Vorderradgabel kommt, da sie sich mit zunehmendem Betrieb des damit ausgestatteten Fahrzeugs verhärtet und damit den Fahrer mit einem Ansprechverhalten konfrontiert, welches sich beispielsweise im Zuge einer Wettbewerbsveranstaltung vom Ansprechverhalten zu Beginn der Veranstaltung deutlich unterscheidet, was ungewünscht ist. Findet dann ein Ölvolumenausgleich statt, so ändert sich das Ansprechverhalten der bekannten Vorderradgabel wieder, so dass der Fahrer mit einem nicht konstanten Ansprechverhalten der Vorderradgabel konfrontiert wird.

Die Druckschrift US 6 234 505 B1 offenbart ein Teleskopfedergabelbein mit einem Innenrohr und einem Außenrohr und einer Dämpfungseinrichtung sowie einer Federeinrichtung, die innerhalb einer im Außenrohr ausgebildeten ersten Kammer angeordnet ist und sich gegenüber einer von der Dämpfungseinrichtung gebildeten und unterhalb der ersten Kammer angeordneten zweiten Kammer abstützt, die zur Aufnahme eines Dämpfungsfluids ausgebildet ist, wobei die Dämpfungseinrichtung einen sich an einer Kolbenstange abstützenden Kolben mit einer oberen und einer unteren Kolbenfläche besitzt und der Kolben innerhalb einer weitgehend konzentrisch zum Innenrohr angeordneten Dämpfungsrohrs verlagerbar ist und das Dämpfungsrohr von einer weitgehend konzentrisch zum Dämpfungsrohr angeordneten Ringraumkammer umgeben ist und eine entlang der Kolbenstange verlagerbare Dichtungseinrichtung zwischen der ersten Kammer und der zweiten Kammer vorgesehen ist. Es ist zudem vorgesehen, dass Öl aus der zweiten Kammer in die erste Kammer zurückfließen kann, wenn der Druck in der zweiten Kammer genügend angestiegen ist. Hierfür ist eine Ausnehmung in dem Kolben vorgesehen, die bei entsprechender - druckbedingter - vertikaler Lage des Kolbens fluidisch mit einer zu der ersten Kammer führenden Bohrung verbunden ist.

Anhand der US 2010/0207350 A1 ist eine Teleskopfedergabel bekannt geworden, die eine Kolbenstange mit einem Verbindungsdurchlass aufweist, der einen Fluidaustausch zwischen einer Ölkammer in einem Dämpferzylinder und einer Ölkammer ausserhalb des Dämpferzylinders ermöglicht, wenn die Teleskopfedergabel eine vorbestimmte entlastete Stellung einnimmt, die eine maximal entlastete Stellung sein kann. Bei dem Verbindungsdurchlass handelt es sich nach einer Ausführungsform um eine mit einem gleichbleibenden Durchmesser versehene Querschnittsverringerung der Kolbenstange, wie sie in Fig. 4 der US 2010/0207350 A1 gezeigt ist. Die Querschnittsverringerung besitzt einen scharfkantigen Übergang zum nicht verjüngten Abschnitt, es liegt also ein Stufensprung zwischen dem nicht verjüngten Abschnitt und dem verjüngten Abschnitt vor. Kommt aufgrund einer Federbewegung der Teleskopfedergabel eine an der Kolbenstange vorgesehene Kolbenstangendichtung in den verjüngten Bereich, findet ein Fluidaustausch zwischen den beiden Ölkammern statt. Befindet sich die Kolbenstangendichtung im nicht verjüngten Bereich, dichtet sie die beiden Ölkammern gegeneinander ab. Die Bewegung der Kolbenstangendichtung über den mit einem Stufensprung versehenen Bereich der Kolbenstange führt zu einer raschen Abnutzung der elastomeren Kolbenstangendichtung. Diese Ausbildung der Querschnittverringerung der Kolbenstange soll einer einfachen Fertigung des Verbindungsdurchlasses dienen. Nach einer in Fig. 5 der US 2010/0207350 gezeigten alternativen Ausführungsform ist ein Fluidaustausch zwischen den Ölkammern über zwei in der Kolbenstange ausgebildete radiale Kommunikationsbohrungen möglich. In beiden Fällen weist die bekannte Teleskopfedergabel einen oben im Bereich von Gabelbrücken angeordneten Dämpferzylinder 21 auf, der im ausgefederten Zustand nicht im Öl der Außenkammer angeordnet ist, so dass es aufgrund der Öffnungsfunktion der Kolbenstangendichtung zum unkontrollierten Entweichen von Öl in die Außenkammer kommt. Aus der Außenkammer tritt dahingegen Luft in den Dämpferzylinder ein, die nicht nach oben entweichen kann, sondern sich unter dem Trennkolben 61 ansammelt. Dies führt dazu, dass das Luftpolster unter dem Trennkolben im Laufe der Zeit größer wird und sich die Dämpfungsfunktion des Dämpferzylinders verschlechtert.

Ausgehend hiervon liegt der vorliegenden Erfindung die Aufgabe zugrunde, ein Teleskopfedergabelbein und eine damit ausgestattete Teleskopfedergabel zu schaffen, die einen Ölvolumenausgleich zwischen der Dämpfungseinrichtung und einem Reservoir oder Ausgleichsraum für Dämpfungsfluid weitgehend unabhängig vom zurückgelegten Fahrprofil - und damit auch etwaiger Stillstandszeiten - des damit ausgestatteten Fahrzeugs zuverlässig herbeiführt und somit ein vom Fahrprofil weitgehend unabhängiges Ansprechverhalten präsentiert.

Die vorliegende Erfindung weist zur Lösung dieser Aufgabe hinsichtlich des Teleskopfedergabelbeins die im Anspruch 1 angegebenen Merkmale auf. Vorteilhafte Ausgestaltungen hiervon sind in den weiteren Ansprüchen beschrieben. Darüber hinaus weist die Erfindung zur Lösung der Aufgabe hinsichtlich der Teleskopfedergabel die im Anspruch 8 angegebenen Merkmale auf.

Die Erfindung sieht ein Teleskopfedergabelbein vor, mit einem Innenrohr und einem Außenrohr und einer Dämpfungseinrichtung sowie einer Federeinrichtung, die innerhalb einer im Außenrohr ausgebildeten ersten Kammer angeordnet ist und sich gegenüber einer von der Dämpfungseinrichtung gebildeten und unterhalb der ersten Kammer angeordneten zweiten Kammer abstützt, die zur Aufnahme eines Dämpfungsfluids ausgebildet ist, wobei die Dämpfungseinrichtung einen sich an einer Kolbenstange abstützenden Kolben mit einer oberen und einer unteren Kolbenfläche besitzt und der Kolben innerhalb eines weitgehend konzentrisch zum Innenrohr angeordneten Dämpfungsrohrs verlagerbar ist und das Dämpfungsrohr von einer weitgehend konzentrisch zum Dämpfungsrohr angeordneten Ringraumkammer umgeben ist und eine entlang der Kolbenstange verlagerbare Dichtungseinrichtung zwischen der ersten und der zweiten Kammer vorgesehen ist und die Kolbenstange mit einem von der Dichtungseinrichtung freigebbaren Fluidkanal zur fluidischen Verbindung der ersten und zweiten Kammer in einem von der Federeinrichtung weitgehend unbelasteten Zustand der Dämpfungseinrichtung versehen ist, wobei, der Fluidkanal in einem Übergangsbereich zwischen einer Kontaktfläche mit der Dichtungseinrichtung, in der die fluidische Verbindung unterbrochen ist, und einer benachbarten Fläche, in der die fluidische Verbindung freigegeben ist, mit einer Übergangsfläche versehen ist derart, dass sich eine entlang einer Innenumfangslinie der Dichtungseinrichtung und der Übergangsfläche ausgebildete Kontaktfläche bei einer Relativbewegung zwischen der Dichtungseinrichtung und der Übergangsfläche ohne Sprungfunktion ändert.

Es bedeutet dies mit anderen Worten, dass die Dichtungseinrichtung während ihrer Bewegung entlang der Übergangsfläche nicht auf einen sprungförmigen oder abrupten Übergang stößt, der zu einer Beschädigung der Dichtungseinrichtung führen könnte.

Die Kontaktfläche verläuft in Längsrichtung der Kolbenstange stetig, ohne dass sie abrupte Übergänge besitzt, wie dies bei dem bekannten Teleskopfedergabelbein der Fall ist. Diese Ausbildung führt dazu, dass die Dichtungseinrichtung nicht einem vorzeitigen Verschleiß unterliegt, wie es bei dem bekannten Teleskopfedergabelbein der Fall ist, da deren Dichtlippe bei der Federbewegung des Teleskopfedergabelbeins ständig über den rechteckigen Absatz des Stufensprungs bewegt wird und einer raschen Abnutzung unterliegt.

Kommt es bei dem erfindungsgemäßen Teleskopfedergabelbein zu einem Eintrag von Dämpfungsöl aus der ersten Kammer, die die Federeinrichtung aufweist, in die Dämpfungseinrichtung, so sorgt die erfindungsgemäße Einrichtung dafür, dass über die fluidische Verbindung zwischen der ersten und zweiten Kammer das in die zweite Kammer eingedrungene Dämpfungsfluid wieder in die erste Kammer mit der Federeinrichtung zurückfließen kann und somit ein Aufpumpen der Dämpfungseinrichtung, wie dies bei dem bekannten Teleskopfedergabelbein der Fall ist, vermieden wird. Damit tritt auch der Effekt der Verhärtung der Dämpfungseinrichtung, die bei dem bekannten Teleskopfedergabelbein ebenfalls ein Problem darstellt, nicht mehr auf.

Das erfindungsgemäße Teleskopfedergabelbein ist dabei so ausgebildet, dass es zur fluidischen Verbindung im weitgehend unbelasteten Zustand der Dämpfungseinrichtung kommt. Diese Ausgestaltung macht von der Erkenntnis Gebrauch, dass der weitgehend unbelastete Zustand der Dämpfungseinrichtung wesentlich häufiger im normalen Fahrbetrieb oder Parkbetrieb eines Motorrads oder Fahrrads stattfindet, als der vollständig eingefederte Zustand.

Wird das erfindungsgemäße Teleskopfedergabelbein, beziehungsweise eine damit gebildete Teleskopfedergabel an einem zur Fahrt auf befestigten Fahrbahnen vorgesehenen Motorrad angeordnet, beispielsweise also einem Straßenmotorrad, einem Tourenmotorrad oder einem Sportmotorrad, so kann bereits ein entsprechendes Beschleunigen des Motorrads mit einer weitgehend ausgefederten Teleskopfedergabel dafür sorgen, dass der weitgehend unbelastete Zustand der Dämpfungseinrichtung erreicht wird und es dann zum Fluidausgleich zwischen der ersten und zweiten Kammer kommt. Wird ein solches Motorrad an einem Hauptständer abgestellt, so wird auch der weitgehend unbelastete Zustand der Dämpfungseinrichtung erreicht und der Fluidaustausch findet wieder statt.

Wird das erfindungsgemäße Teleskopfedergabelbein, beziehungsweise die damit gebildete Teleskopfedergabel an einem Motorrad angebracht, welches zur Fahrt auf unbefestigtem Gelände vorgesehen ist, beispielsweise einem Geländesportmotorrad, so tritt auch dort der weitgehend unbelastete Zustand der Dämpfungseinrichtung automatisch dann ein, wenn das Motorrad auf einem Hauptständer geparkt wird. Auch kann dieser Zustand bei einer entsprechenden Beschleunigung des Motorrads erreicht werden und beispielsweise auch dann, wenn das Geländesportmotorrad mit dem Vorderrad in der Luft ist, was bei solchen Fahrzeugen häufig der Fall ist, nämlich beispielsweise beim Sprung über eine Geländeunebenheit. Durch die Ausgestaltung des Teleskopfedergabelbeins derart, dass die fluidische Verbindung zwischen der ersten und der zweiten Kammer in einem von der Federeinrichtung weitgehend unbelasteten Zustand der Dämpfungseinrichtung stattfindet, wird eine häufig stattfindende automatische Referenzierung des Teleskopfedergabelbeins erreicht, d. h. es kommt zu einem Fluidaustausch aus der zweiten Kammer in Richtung zur ersten Kammer, die im unbelasteten Zustand der Dämpfungseinrichtung weitgehend Umgebungsdruck besitzt, was dazu führt, dass auch bei einem Eindringen von Dämpfungsfluid aus der ersten Kammer in die zweite Kammer mit der Dämpfungseinrichtung eine Veränderung des Feder-Dämpfungsverhaltens nicht einhergeht, da das eingedrungene Dämpfungsfluid regelmäßig wieder in die erste Kammer entspannt wird und somit das Ansprechverhalten der Dämpfungseinrichtung des Teleskopfedergabelbeins beziehungsweise der gesamten Teleskopfedergabel immer gleich bleibt und sich auch bei einem Geländesportmotorrad, welches in einem harten Wettbewerbseinsatz bewegt wird, nicht verändert.

Das erfindungsgemäße Teleskopfedergabelbein besitzt auch den Vorteil, dass die an der Kolbenstange angeordnete Dichtungseinrichtung nicht mit hoher Vorspannung an dieser angebracht werden muss, da sie ein Eindringen von Dämpfungsfluid aus der ersten Kammer beziehungsweise Federkammer in die Dämpfungseinrichtung nicht vollständig verhindern muss, da ein regelmäßiges Zurückströmen des Öls stattfindet und es somit auch nicht zu einem Aufbau eines hohen Losbrechmoments zwischen der Dichtungseinrichtung und der Kolbenstange kommt und das damit ausgebildete Teleskopfedergabelbein ausgesprochen feinfühlig reagierend eingestellt werden kann.

Es ist vorgesehen, dass der Fluidkanal mittels der Dichtungseinrichtung zur Herstellung und/oder Unterbrechung der fluidischen Verbindung betätigbar ist. D. h. mit anderen Worten, dass die Dichtungseinrichtung dafür sorgt, dass die Fluidverbindung zwischen der ersten Kammer und der zweiten Kammer von der Dichtungseinrichtung hergestellt beziehungsweise unterbrochen wird. Hierdurch wird erreicht, dass in Abhängigkeit von dem Einsatzzweck des Teleskopfedergabelbeins beziehungsweise der damit ausgestatteten Teleskopfedergabel ein Zusammenspiel zwischen der Dichtungseinrichtung und de Fluidkanal so realisiert werden kann, dass die fluidische Verbindung an das jeweilige Fahrprofil beziehungsweise den jeweiligen Einsatzzweck des Motorrads beziehungsweise Fahrrads angepasst werden kann.

Handelt es sich beispielsweise um ein Geländesportmotorrad, so sorgt die Dichtungseinrichtung in einem weitgehend vollständig ausgefederten Zustand des Teleskopfedergabelbeins für die fluidische Verbindung zwischen der ersten und der zweiten Kammer, während sie bei einem großen und schweren Tourenmotorrad, welches nicht über einen Hauptständer verfügt, so angeordnet wird, dass die fluidische Verbindung bei einem normalen Beschleunigungsvorgang des Motorrads stattfinden kann.

Nach einer Weiterbildung der Erfindung ist es vorgesehen, dass es sich bei dem Fluidkanal um eine am Außenumfang der Kolbenstange entlang der Längserstreckung der Kolbenstange ausgebildete Nut handelt, in deren Längserstreckungsbereich die Dichtungseinrichtung bei einer Ausfederbewegung des Teleskopfedergabelbeins gelangt und somit Dämpfungsöl aus der Dämpfungseinrichtung in die Federkammer oder erste Kammer strömen kann. Am Umfang der Kolbenstange können auch mehrere solcher Nuten verteilt angeordnet sein, die für einen Fluidaustausch zwischen den beiden Kammern sorgen. Auch die an der Kolbenstange ausgebildete Nut beziehungsweise die Nuten sind an beiden Enden jeweils mit einer Übergangsfläche ohne Sprünge, Kanten oder Stufen oder dergleichen versehen, so dass die Kontaktfläche zwischen der Dichtungseinrichtung und der Übergangsfläche in Längsrichtung der Kolbenstange stetig verläuft und es nicht zu einer raschen Abnutzung der Dichtungseinrichtung kommt.

Die Übergangsfläche kann in einer Draufsichtansicht eine von in Längsrichtung der Kolbenstange verlaufenden Seitenlinien der Nut zu den Enden der Endbereiche winkelig zulaufende Konfiguration aufweisen und in einer Längsschnittansicht eine von der Oberfläche der Kolbenstange zum Grund der Nut S-förmig geschwungene Konfiguration besitzen. Die Nut beziehungsweise die Nuten können an einer aus einem gezogenen Rohr ausgebildeten Kolbenstange mittels eines spanlosen Umformvorgangs angebracht werden. Hierzu wird ein Stempel mit einer der Form und den Abmessungen der Nut entsprechenden Positivform mit dem gezogenen Rohr unter Druck in Kontakt gebracht und mittels eines plastischen Formgebungsschrittes die Nut in der Kolbenstange erzeugt. Nach dieser Formgebung wird die Oberfläche des Rohrs geschliffen, so dass es durch die plastische Formgebung nicht zur Ausbildung von Graten, Stufen oder Sprüngen an der Kolbenstange kommt und durch den Schleifvorgang darüber hinaus eine fein bearbeitete Oberfläche der Kolbenstange entsteht, an der die Dichtungseinrichtung entlang bewegt werden kann, ohne dass diese der Gefahr einer Beschädigung ausgesetzt ist, wie dies bei dem bekannten Teleskopfedergabelbein der Fall ist.

Befindet sich die Dichtungseinrichtung unterhalb des Fluidkanals angeordnet, so kann ein Fluidaustausch zwischen den beiden Kammern nicht stattfinden, findet aber beispielsweise ein entsprechend starker Beschleunigungsvorgang statt oder gelangt die Dichtungseinrichtung beispielsweise beim Aufheben des Motorrads auf einem Hauptständer oder nach dem Überfahren einer Fahrbahnunebenheit beim Ausfedern in den Bereich des Fluidkanals, so strömt aus der zweiten Kammer in diese eingedrungenes Dämpfungsfluid über den Fluidkanal zur ersten Kammer und in die Federkammer zurück. Das Teleskopfedergabelbein beziehungsweise die Teleskopfedergabel ist wieder referenziert. Nach einer Weiterbildung der Erfindung ist es auch vorgesehen, dass der Fluidkanal eine an der Kolbenstange ausgebildete Durchmesserverringerung ist, die von der Dichtungseinrichtung freigebbar ist.

Es bedeutet dies mit anderen Worten, dass bei dieser Ausführungsform die Kolbenstange eine Einschnürung aufweist, die oberhalb der Dichtungseinrichtung an der Kolbenstange ausgebildet ist und die von der Dichtungseinrichtung freigegeben wird, wenn sich bei einem Geländesportmotorrad beispielsweise das Vorderrad gerade in der Luft befindet und die Teleskopfedergabel ausgefedert ist und auf diese Weise ein Fluidaustausch zwischen der zweiten und der ersten Kammer stattfindet.

Nach einer Weiterbildung der Erfindung ist es auch vorgesehen, dass diese Durchmesserverringerung entlang einer Längserstreckung der Kolbenstange ausgebildet sein kann, so dass die Einschnürung eine vorbestimmte Längserstreckung besitzt und es auf diese Art und Weise möglich ist, dass die Dichtungseinrichtung schon bei einer geringfügigen Ausfederbewegung der Teleskopfedergabel in den Bereich der Durchmesserverringerung kommt und diese Durchmesserverringerung kann in der Form einer Umlaufnut an der Kolbenstange ausgebildet sein oder beispielsweise auch nur in der Form eines Segments einer Umlaufnut, so dass die Durchmesserverringerung nicht vollständig um die Kolbenstange herumlaufen muss.

Nach der Erfindung ist es vorgesehen, dass der Fluidkanal in einem Übergangsbereich zwischen einer Kontaktfläche mit der Dichtungseinrichtung, in der die fluidische Verbindung unterbrochen ist, und einer benachbarten Fläche, in der die fluidische Verbindung freigegeben ist, mit einer Übergangsfläche versehen ist, derart, dass eine entlang einer Innenumfangslinie der Dichtungseinrichtung und der Übergangsfläche ausgebildete Kontaktfläche bei einer Relativbewegung zwischen der Dichtungseinrichtung und der Übergangsfläche ohne Sprungfunktion ansteigt. Damit stößt die Dichtungseinrichtung während ihrer Bewegung entlang der Übergangsfläche nicht auf einen sprungförmigen, als Unstetigkeitsstelle ausgebildeten Übergang, der zu einer Beschädigung der Dichtungseinrichtung führen könnte.

Nach einer vorteilhaften Ausführungsform kann daher eine an der Kolbenstange vorgesehene Durchmesserverringerung so ausgebildet sein, dass an den zylindrischen Bereich der Kolbenstange, an dem die fluidische Verbindung zwischen der ersten und zweiten Kammer unterbrochen ist, ein radialer Übergang erfolgt, dem sich ein Bereich anschließt, der in einer Längsschnittansicht der Kolbenstange eine in einem Winkel von beispielsweise 8 Grad bis 15 Grad zur Längsmittelachse der Kolbenstange verlaufende Fläche ausbildet, die im unteren Übergangsbereich der Fläche wieder radial in einen Bereich mit verringertem Durchmesser der Kolbenstange übergeht, der eine vorbestimmte Längserstreckung entlang der Kolbenstange besitzt und wiederum in einen radialen Übergangsbereich mit einer daran anschließenden ansteigenden Fläche von wieder etwa 8 Grad bis 15 Grad Steigung ansteigt, der wiederum einer radiale Übergangsfläche folgt und zwar in den dann anschließenden Bereich der Kolbenstange, in der eine fluidische Verbindung zwischen der ersten und zweiten Kammer wieder unterbrochen ist.

Wie es vorstehend bereits erwähnt wurde, zeichnet sich das erfindungsgemäße Teleskopfedergabelbein unter anderem dadurch aus, dass die entlang der Kolbenstange verlagerbare Dichtungseinrichtung nicht mit hoher Vorspannung an der Kolbenstange angeordnet werden muss, da ein vollständig dichter Sitz nicht erforderlich ist, da ein in die zweite Kammer eingedrungenes Dämpfungsfluid regelmäßig wieder in die erste Kammer entspannt wird. Es kann aber trotzdem von Vorteil sein, wenn die Dichtungseinrichtung eine umlaufende Dichtlippe besitzt, die im Kontaktbereich mit der Einrichtung mit einer Beschichtung zur Verringerung des Reibungskoeffizienten zwischen Dichtlippe und Einrichtung ausgebildet ist. Dadurch kann eine nochmalige Verringerung des Reibungskoeffizienten erreicht werden und eine ohnehin schon kaum mehr vorhandene Losbrechkraft der Dichtungseinrichtung an der Kolbenstange weiterhin verringert werden.

Die Dichtungseinrichtung ist nach einer Weiterbildung der Erfindung in einem Ringraum innerhalb eines die zweite Kammer gegen die Kammer abschließenden Deckels unter Vorspannung angeordnet und der Deckel ist an einem Außenumfangsbereich mit mindestens einer Dichtlippe versehen, die an einer Innenumfangswand des Innenrohrs anliegt. Der Deckel liegt relativ zum Innenrohr beziehungsweise zur Innenumfangswand des Innenrohrs fest und sorgt mit seiner am Außenumfang angeordneten Dichtlippe dafür, dass Dämpfungsfluid aus der Dämpfungseinrichtung in die Federkammer beziehungsweise umgekehrt nicht strömen kann und dieser Dichtsitz auch bei in der Federkammer, beziehungsweise der Dämpfungseinrichtung unterschiedlich hohem Druckniveau aufrechterhalten wird.

Bei dem erfindungsgemäßen Teleskopfedergabelbein befindet sich die Dämpfungseinrichtung in der zweiten Kammer innerhalb eines Ölvolumens angeordnet derart, dass sich die Dichtungseinrichtung im Schmieröl innerhalb der Aussenkammer befindet und daher auch aus der Umgebung keine Luft ansaugen kann und sich demgemäß das Dämpfungsverhalten der Dämpfungseinrichtung nicht durch Lufteintritt ändert, wie dies bei der mit einer Dämpfungseinrichtung im oberen Bereich des Teleskopfedergabelbeins angeordneten Vorrichtung nach der US 2010/0207350 A1 der Fall ist.

Etwaige durch ein Aufschäumen des Öl-Luft-Gemisches in der Federkammer in die Dämpfungseinrichtung gelangte Luft wird durch den Fluidkanal und einen Dichtungssitz zwischen der Dichtungseinrichtung und der Kolbenstange zuverlässig aus der Dämpfungseinrichtung ausgetragen, da die Dichtungseinrichtung das am höchsten angeordnete Bauteil der Dämpfungseinrichtung darstellt.

Die Erfindung sieht schließlich auch eine Teleskopfedergabel vor, die zwei Teleskopfedergabelbeine besitzt, wie sie vorstehend erläutert wurden und beispielsweise auch noch eine obere Gabelbrücke und eine untere Gabelbrücke aufweisen kann. Die Teleskopfedergabelbeine sind dabei an der Teleskopfedergabel so angeordnet, dass die Dämpfungseinrichtung jeweils unterhalb der die Federeinrichtung aufnehmenden ersten Kammer angeordnet ist. In der die Federeinrichtung aufnehmenden ersten Kammer befindet sich zur Schmierung auch Dämpfungsfluid, in der ersten Kammer ist aber auch Luft vorhanden. Während des Betriebs der Teleskopfedergabel wird das Öl-Luft-Gemisch in der Federkammer unter hohen Druck gesetzt, wenn die Teleskopfedergabel beispielsweise nahezu vollständig eingefedert ist, und sollte es in einem solchen Zustand über die Dichtungseinrichtung an der Kolbenstange zu einem

Eindringen von Luft in die Dämpfungseinrichtung kommen, so sorgt die erfindungsgemäße Teleskopfedergabel dafür, dass diese Luft während der herbeigeführten fluidischen Verbindung zwischen der ersten und der zweiten Kammer wieder in Richtung zur ersten Kammer entweicht, da diese oberhalb der Dämpfungseinrichtung angeordnet ist und so selbst ein Eindringen von Luft in die Dämpfungseinrichtung nicht für eine bleibende Veränderung des Ansprechverhaltens der Dämpfungseinrichtung und damit der Teleskopfedergabel führt.

Die Erfindung wird im Folgenden anhand der Zeichnung näher erläutert. Diese zeigt in:
Fig. 1 eine Längsschnittdarstellung eines Teleskopfedergabelbeins gemäß einer Ausführungsform nach der vorliegenden Erfindung;
Fig. 2 eine vergrößerte Darstellung der Einzelheit A nach Fig. 1 der Zeichnung;
Fig. 3 eine vergrößerte Darstellung eines Ausschnitts aus Fig. 2;
Fig. 4 eine Längsschnittdarstellung eines Teleskopfedergabelbeins gemäß einer weiteren Ausführungsform nach der vorliegenden Erfindung;
Fig. 5 eine Draufsichtansicht auf eine Kolbenstange mit einem als Nut ausgebildeten Fluidkanal;
Fig. 6 eine um 90 Grad gedrehte Schnittansicht der Kolbenstange nach Fig. 5;
Fig. 7 eine vergrößerte Darstellung der Einzelheit "A" nach Fig. 6; und
Fig. 8 eine perspektivische Darstellung einer Teleskopfedergabel mit zwei erfindungsgemäßen Teleskopfedergabelbeinen.

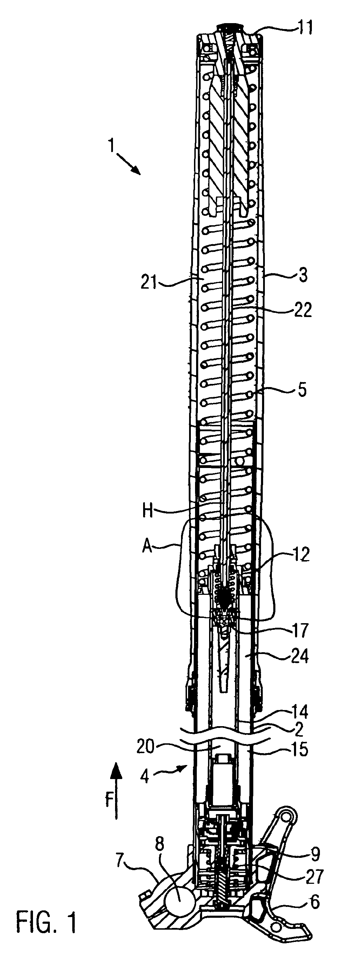

Fig. 1 der Zeichnung zeigt eine Längsschnittdarstellung einer Ausführungsform eines Teleskopfedergabelbeins 1 gemäß der vorliegenden Erfindung.

Das Teleskopfedergabelbein 1 weist ein Innenrohr 2, ein Außenrohr 3, eine Dämpfungseinrichtung 4 und eine Federeinrichtung 5 in der Form einer Hauptfeder auf.

An einer Gabelfaust 6 kann eine nicht näher dargestellte Steckachse eines Vorderrads eines Motorrads mittels der Klemmfaust 7 befestigt werden, wobei zu diesem Zweck eine Bohrung 8 zur Aufnahme der Steckachse vorgesehen ist.

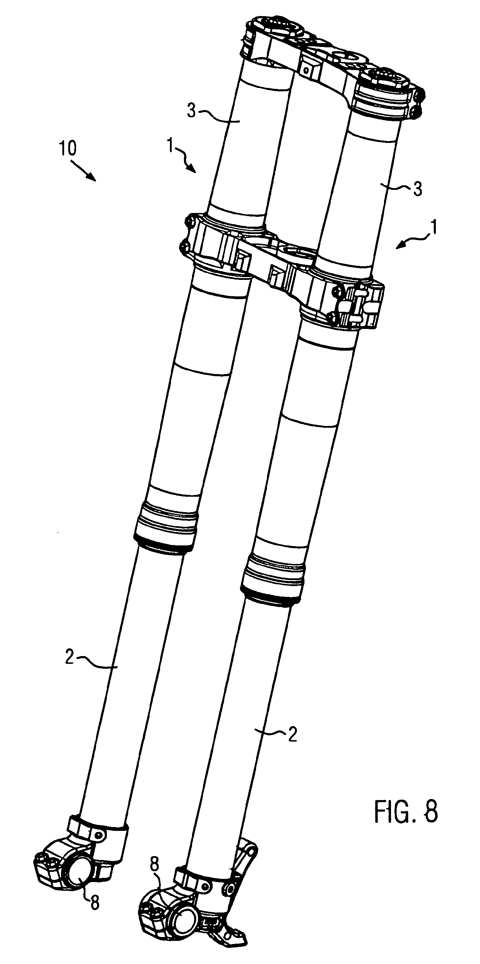

Im Bereich des der Gabelfaust 6 zugewandten Endabschnitts des Innenrohrs 2 ist ein Ventilkörper 9 vorgesehen, der zur Herbeiführung der Dämpfungswirkung und der Einstellung der Dämpfungscharakteristik an das vom Fahrer gewünschte Ansprechverhalten des Teleskopfedergabelbeins 1 und damit der näher anhand von Fig. 8 ersichtlichen Teleskopfedergabel 10 vorgesehen ist.

An dem, dem Ventilkörper 9 gegenüberliegenden Ende des Teleskopfedergabelbeins 1 ist ein in das Außenrohr 3 einschraubbarer Verschlussdeckel 11 vorgesehen, der gleichzeitig der Abstützung der Hauptfeder 5 dient.

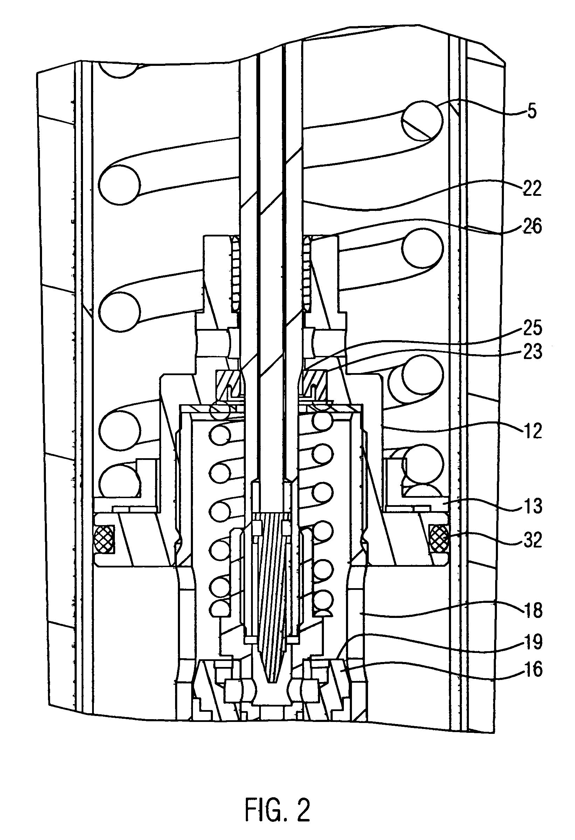

An dem, dem Verschlussdeckel 11 gegenüberliegenden Ende stützt sich die Hauptfeder an einem Deckel 12 ab, und zwar unter Zwischenschaltung einer näher anhand von Fig. 2 ersichtlichen Ringscheibe 13.

Die Dämpfungseinrichtung 4 besitzt ein konzentrisch zum Innenrohr angeordnetes Dämpfungsrohr 14, welches von einer Ringraumkammer 15 umgeben ist, die den Bereich zwischen der Außenumfangsmantelfläche des Dämpfungsrohrs 14 und der Innenumfangsmantelfläche des Innenrohrs 2 bildet.

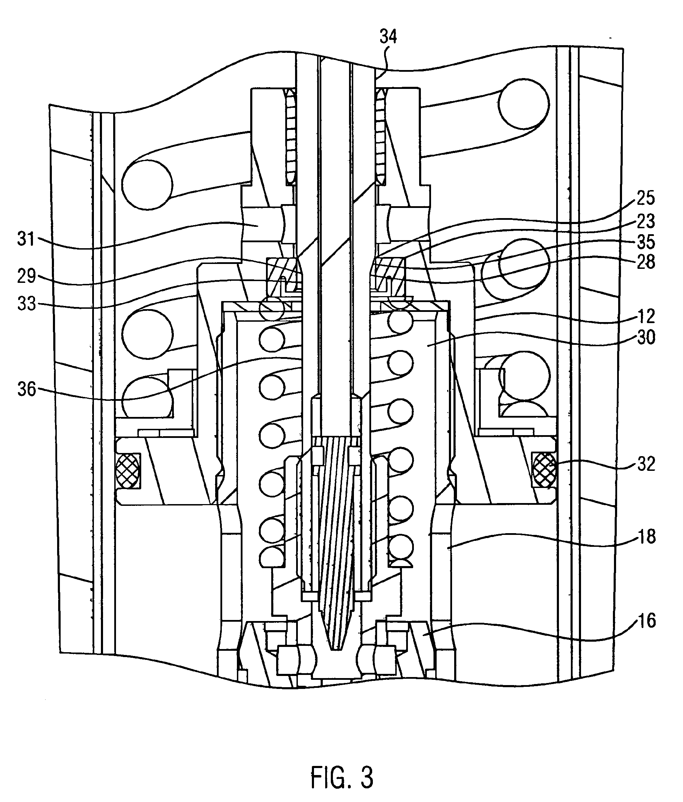

Wird das Teleskopfedergabelbein 1 im eingebauten Zustand von einer, beispielsweise von einer Bodenunebenheit stammenden, in Richtung des Pfeils F wirkenden Kraft beaufschlagt, so führt dies zu einer teleskopartigen Bewegung des Innenrohrs 2 relativ zum Außenrohr 3, d. h. das Innenrohr 2 wird in der Zeichnungsebene in Richtung nach oben verschoben, wobei dies gegen die Wirkung der Hauptfeder 5 geschieht. Die Hauptfeder 5 wird dabei komprimiert und der näher anhand von Fig. 2 und 3 der Zeichnung ersichtliche Dämpfungskolben 16 verschiebt sich dabei relativ zum Dämpfungsrohr 14 und verdrängt das innerhalb des im Innenraum des Dämpfungsrohrs 14 vorhandene Dämpfungsfluid über seine untere Kolbenfläche 17.

Das so verdrängte Dämpfungsfluid gelangt über in dem Ventilkörper 9 ausgebildete Bohrungen in die Ringraumkammer 15, strömt dort in der Zeichnungsebene in Richtung nach oben und tritt über die in Fig. 2 ersichtliche Ausnehmung 18 wieder in den Innenraum 20 des Dämpfungsrohrs 14 ein und beaufschlagt die obere Kolbenfläche 19 des Dämpfungskolbens 16.

Die Hauptfeder 5 ist innerhalb einer im Außenrohr 3 ausgebildeten ersten Kammer oder Federkammer 21 angeordnet, die teilweise mit Dämpfungsfluid gefüllt ist und in der sich auch bei bestimmungsgemäßer Einbaulage am Motorrad oberhalb des Deckels 12 ein Luftvolumen befindet. Der Dämpfungskolben 16 ist an einer sich innerhalb des Innenraums des Außenrohrs 3 erstreckenden Kolbenstange 22 festgelegt, die am Verschlussdeckel 11 befestigt werden kann und der Abstützung des Dämpfungskolbens 16 gegenüber des im Innenraum 20 aufgebauten Innendrucks dient. An der Kolbenstange 22 ist eine anhand von Fig. 2 und 3 der Zeichnung ersichtliche Dichtungseinrichtung 23 vorgesehen, die der Abdichtung der ersten Kammer 21 gegenüber der in der Dämpfungseinrichtung 4 ausgebildeten zweiten Kammer 24 dient.

Der Druck in der zweiten Kammer 24 verändert sich unter anderem in Abhängigkeit der Relativverlagerung des Innenrohrs 2 und Außenrohrs 3 zueinander und auch in Abhängigkeit der Einstellung der am Ventilkörper 9 vorgesehenen Bohrungen beziehungsweise Ventile.

Kommt es im Rahmen einer Relativverlagerung des Innenrohrs 2 und Außenrohrs 3 zueinander zum Aufbau eines Drucks in der ersten Kammer 21, so kann über einen zwischen der Dichtungseinrichtung 23 und der Außenumfangsmantelfläche der Kolbenstange 22 ausgebildeten Dichtspalt Dämpfungsfluid in der Form eines Gabelöls in Richtung zur zweiten Kammer 24 hindurchtreten. Ein vollständig hermetisches Abdichten der Dichtungseinrichtung 23 relativ zur Kolbenstange 22 ist nicht erforderlich, wie dies nachfolgend noch ausgeführt werden wird.

Der Sitz der Dichtungseinrichtung 23 an der Kolbenstange 22 wird so gewählt, dass zwar keine großen Ölvolumina hindurchtreten, aber keine große Flächenpressung zwischen einer Dichtlippe 25 der Dichtungseinrichtung 23 und der Kolbenstange 22 auftritt. Die Kolbenstange 22 ist über eine Führungsbuchse 26 geführt, die an einem rohrstutzenförmigen Endbereich des Deckels 12 vorgesehen ist.

Fig. 1 der Zeichnung zeigt das Teleskopfedergabelbein 1 in einem ausgefederten Zustand, der einem Zustand entspricht, in dem die Dämpfungseinrichtung 4 von der Federeinrichtung 5 weitgehend unbelastet ist. Wird ein mit der Teleskopfedergabel 10 versehenes Motorrad bestimmungsgemäß benutzt, so führen die am nicht näher dargestellten Vorderrad auftretenden Kräfte während der Fahrt zu einer Belastung des Teleskopfedergabelbeins in Richtung der Kraft F nach Fig. 1, d. h. das Innenrohr 2 wird relativ zum Außenrohr 3 in der Zeichnungsebene in Richtung nach oben verlagert.

In einem solchen Zustand befindet sich die Dichtungseinrichtung 23 beispielsweise auf Höhe der in Fig. 1 dargestellten Bezugslinie H. Diese Bezugslinie ist in Fig. 2 der Zeichnung nicht ersichtlich, denn sie befindet sich oberhalb des in Fig. 2 dargestellten Ausschnitts A nach Fig. 1 der Zeichnung. Damit wird aber klar, dass sich die Dichtungseinrichtung 23 im zylindrischen Bereich der Kolbenstange 22 angeordnet befindet und daher die Dichtfläche der Dichtungseinrichtung 23, beziehungsweise die Dichtlippe 25 der Dichtungseinrichtung 23 an der Außenumfangsfläche der Kolbenstange 22 anliegt und ein Eintreten von Dämpfungsfluid aus der ersten Kammer 21 in die zweite Kammer 24 weitgehend verhindert.

Aufgrund unvermeidbarer Undichtigkeiten im System während des Betriebs des Motorrads und dem in der ersten Kammer 21 auftretendem hohen Druck kommt es zu einem langsamen Strömen an Dämpfungsfluid aus der ersten Kammer 21 in die zweite Kammer 24, also zu einer Zunahme an Dämpfungsfluid in der Dämpfungseinrichtung 4.

Die Dämpfungseinrichtung weist eine im Bereich des gabelfaustseitigen Endes des Innenrohrs 2 vorgesehene Cartridge-Feder 27 auf, die eine bestimmte Zunahme an Dämpfungsfluid in der Dämpfungseinrichtung 4 dadurch ausgleicht, dass sie komprimiert wird. Die Aufnahmekapazität an zusätzlichem Dämpfungsfluid in der Dämpfungseinrichtung 4 ist aber beschränkt und ein weiteres Ansteigen des Ölvolumens in der Dämpfungseinrichtung 4 würde dazu führen, dass die Cartridge-Feder 27 auf Block geht, wie dies bei bekannten Teleskopfedergabeln der Fall ist.

Die erfindungsgemäße Anordnung aber vermeidet dieses Problem dadurch, dass es zu einer fluidischen Verbindung zwischen der ersten Kammer 21 und der zweiten Kammer 24 kommt, wenn die Dämpfungseinrichtung 4 von der Federeinrichtung 5 weitgehend nicht belastet ist. In einem solchen Zustand befindet sich das Teleskopfedergabelbein in einem weitgehend ausgefederten Zustand, beispielsweise dann, wenn sich das Vorderrad eines mit der erfindungsgemäßen Anordnung versehenen Geländesportmotorrads gerade in der Luft befindet oder das Motorrad auf dem Hauptständer abgestellt worden ist und das Teleskopfedergabelbein beziehungsweise die Teleskopfedergabel die in Fig. 1 der Zeichnung dargestellte Stellung einnimmt. Diese Stellung entspricht auch den in den Fig. 2 und Fig. 3 der Zeichnung dargestellten Anordnungen.

Wie es anhand von Fig. 3 der Zeichnung ohne weiteres ersichtlich ist, befindet sich in diesem Zustand die Dichtungseinrichtung 23 im Übergangsbereich 28 einer Durchmesserverringerung 29 beziehungsweise bereits innerhalb der Durchmesserverringerung 29 angeordnet. In einer solchen, von der Federeinrichtung 5 weitgehend unbelasteten Stellung der Dämpfungseinrichtung 4 dichtet die Dichtungseinrichtung 23 gegen die Kolbenstange 22 nicht mehr ab und es kommt zu einer fluidischen Verbindung zwischen der ersten Kammer 21 und der zweiten Kammer 24.

In diesem, von der Federeinrichtung 5 weitgehend unbelasteten Zustand der Dämpfungseinrichtung 4, befindet sich das Druckniveau in der ersten Kammer 21 weitgehend auf Umgebungsdruck und ist kleiner als das Druckniveau in der Dämpfungseinrichtung 4 beziehungsweise der zweiten Kammer 24.

Auf diese Weise kann in die Dämpfungseinrichtung 4 gelangtes überschüssiges Dämpfungsfluid über die fluidische Verbindung zwischen der zweiten Kammer 24 und der ersten Kammer 21 in die erste Kammer 21 zurückströmen und es findet eine Referenzierung der Dämpfungseinrichtung 4 statt. Überschüssiges, in der zweiten Kammer 24 angehäuftes Dämpfungsfluid strömt über die Ausnehmung 18 und einen Innenraum 30 des Deckels 12, die Durchmesserverringerung 29 und eine Querbohrung 31 wieder in die erste Kammer beziehungsweise Federkammer 21 zurück und das Druckniveau in der Dämpfungseinrichtung 4 nimmt wieder das durch ihre Auslegung bestimmte Druckniveau an, d. h. die Dämpfungseinrichtung 4 ist wieder referenziert und ein Fahrer des Motorrads wird nicht mit belastungsabhängig sich veränderndem Ansprechverhalten der Dämpfungseinrichtung 4 konfrontiert.

Dies wiederum führt dazu, dass sich das Ansprechverhalten der Teleskopfedergabel 10, die von den erfindungsgemäßen Teleskopfedergabelbeinen 1 Gebrauch macht, während des bestimmungsgemäßen Betriebs nicht verändert und die Teleskopfedergabel 10 dem Fahrer ein gleichbleibendes Ansprechverhalten bietet.

Das erfindungsgemäße Teleskopfedergabelbein und die damit ausgestattete Teleskopfedergabel bieten den Vorteil, dass die Dämpfungseinrichtung vor dem Hub referenziert wird und sich dieser Vorgang sehr regelmäßig wiederholt. Die Anordnung bietet weiterhin den Vorteil, dass das Losbrechmoment der an der Kolbenstange gleitenden Dichtungseinrichtung ausgesprochen gering ist und damit das reibungsbedingte Verhalten der Anordnung verbessert wird. Durch die bei der dargestellten Ausführungsform präsentierte Querschnittsverjüngung kommt es zu einem weichen Aufgleiten der Dichtungseinrichtung in den Bereich der Kolbenstange, an dem die Dichtungseinrichtung eine Dichtwirkung erzeugen soll, weshalb die Dichtung eine hohe Lebensdauer aufweist und darüber hinaus eine sichere Öffnungsfunktion gewährleistet.

Befindet sich die Dichtungseinrichtung 23 bei der Relativbewegung der Dichtungseinrichtung 23 relativ zur Kolbenstange 22 in dem Bereich einer in Fig. 3 dargestellten Kontaktfläche 34 angeordnet, also in dem zylindrischen Bereich der Kolbenstange 22, so ist dort die fluidische Verbindung zwischen der ersten Kammer 21 und der zweiten Kammer 24 durch ein Anliegen der Dichtungseinrichtung 23 mit ihrer Dichtlippe 25 an der Kontaktfläche 34 mit der Ausnahme unvermeidbarer Undichtigkeiten unterbrochen. Kommt die Dichtungseinrichtung 23 beispielsweise aufgrund einer Ausfederbewegung der Teleskopfedergabel 10 in den Bereich einer Fläche 36, in der die fluidische Verbindung zwischen den beiden Kammern 21, 24 freigegeben ist, so bewegt sich die Dichtlippe 25 der Dichtungseinrichtung 23 auf ihrem Weg zwischen der Kontaktfläche 34 und der Fläche 36 entlang einer S-förmig ausgebildeten Übergangsfläche 33, entlang der sich in Längsachsrichtung der Kolbenstange 22 allmählich eine Fluidströmung zwischen den beiden Kammern 21, 24 einstellt.

Die Übergangsfläche 33 ist sanft ohne sprungartige oder stufenartige Veränderungen der Flächenform ausgebildet. Entlang der Innenumfangslinie der Dichtlippe 25 der Dichtungseinrichtung 23 und der Übergangsfläche 33 bildet sich also eine Kontaktfläche 35 aus, entlang der sich die Dichtlippe 25 bewegt und die Kontaktfläche 35 besitzt keine sprungartigen oder stufenartigen Veränderungen hinsichtlich ihrer Steigung in Längsachsrichtung der Kolbenstange 22. Die Kontaktfläche 35 verläuft stetig, die Übergangsfläche 33 ist ohne einer Sprungfunktion entsprechenden Unstetigkeitsstellen ausgebildet, sie verläuft sanft und ohne sprungartige oder stufenartige Veränderungen.

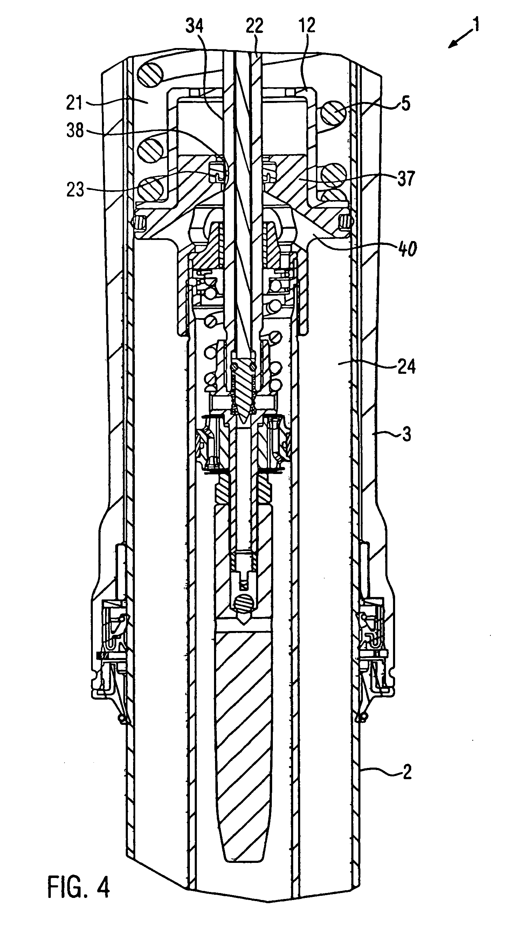

Fig. 4 der Zeichnung zeigt einen Ausschnitt einer alternativen Ausführungsform eines Teleskopfedergabelbeins 1 mit einem Innenrohr 2, einem Außenrohr 3, einer Kolbenstange 22, einer Hauptfeder 5, einem Deckel 12 sowie einer in einer Aufnahme 37 angeordneten Dichtungseinrichtung 23. In der in Fig. 4 der Zeichnung dargestellten Stellung befindet sich die Dichtungseinrichtung 23 in dem Bereich eines als Nut 38 ausgebildeten Fluidkanals angeordnet. Es heißt dies mit anderen Worten, dass über die Nut 38 eine Fluidkommunikation zwischen der ersten Kammer 21 und der zweiten Kammer 24 stattfinden kann.

Befindet sich die Dichtungseinrichtung 23 mit ihrer Dichtlippe 25 in dem Bereich einer Kontaktfläche 34, dann dichtet die Dichtlippe 25 die erste Kammer 21 gegen die zweite Kammer 24 ab. Gelangt die Dichtungseinrichtung 23 aber in den Bereich der Nut 38, kann Schmieröl aus der zweiten Kammer 24 in die erste Kammer 21 zurückströmen und zwar über eine in der Aufnahme 37 ausgebildete Bohrung 38.

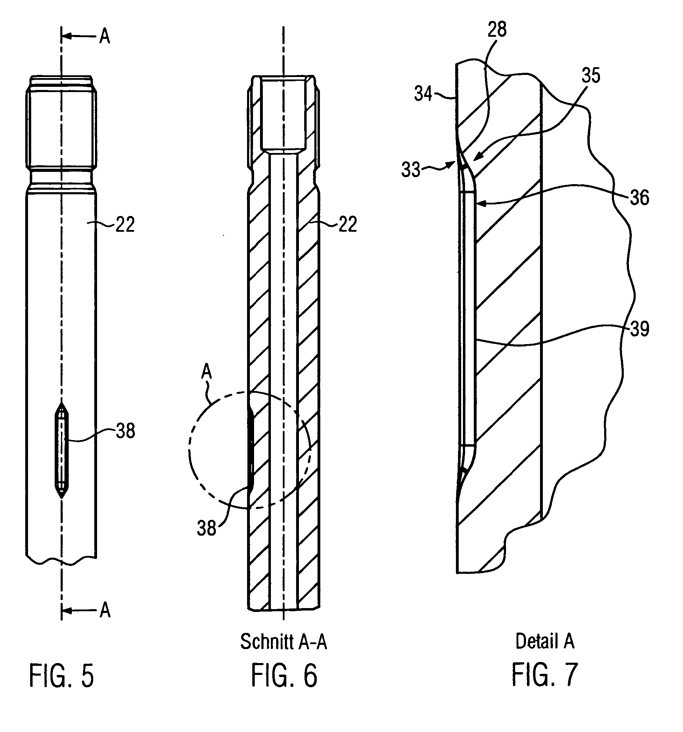

Fig. 5 der Zeichnung zeigt einen Ausschnitt der Kolbenstange 22 mit einer an der Au ßenumfangsfläche der Kolbenstange 22 ausgebildeten Nut 38. Bei der dargestellten Ausführungsform weist die Nut 38 eine Länge von etwa 9 mm in Axiallängsrichtung der Kolbenstange 22 auf, eine Breite quer zu Längsrichtung von etwa 1 mm und eine näher anhand von Fig. 7 der Zeichnung ersichtliche Tiefe von etwa 0.6 mm.

Fig. 6 der Zeichnung zeigt eine Längsschnittansicht eines Teils einer Kolbenstange 22 mit einem Ausschnitt "A", der in Fig. 7 der Zeichnung näher dargestellt ist.

Die Kolbenstange 22 besitzt eine Kontaktfläche 34, an der die Dichtungseinrichtung 23 mit ihrer Dichtlippe 25 aufliegt, um den Abfluss von Schmieröl aus der ersten Kammer 21 in die zweite Kammer 24 weit gehend zu unterbinden. Im Bereich der Fläche 36 ist eine fluidische Verbindung zwischen den beiden Kammern 21, 24 freigegeben und dazwischen befindet sich der Übergangsbereich 28, der die Übergangsfläche 33 besitzt. Ähnlich der in Fig. 3 dargestellten Ausführungsform besitzt auch die Nut 38 im Übergangsbereich 28 zwischen der Kontaktfläche 34 und der Fläche 36 eine S-förmige Konfiguration mit sanften Übergängen ohne Stufensprung, Sprüngen oder Stufen oder dergleichen. Bewegt sich die Dichtungseinrichtung 23 vom Bereich der Kontaktfläche 34 in den Bereich der Kolbenstange 23, welche die Nut 38 aufweist, dann gleitet die Dichtlippe 25 über den Bereich der Übergangsfläche 33 mit der Kontaktfläche 35, entlang der die Dichtwirkung der Dichtlippe 25 allmählich abnimmt. Die Kontaktfläche 35 ist frei von scharfen Ecken, Kanten, Stufen, Sprüngen oder dergleichen und beschädigt daher die Dichtlippe 25 auf ihrem Weg von der Kontaktfläche 34 zu dem Bereich der Nut 38, an dem sich die Dichtlippe 25 nicht mehr bis zu dem Nutgrund 39 erstreckt, nicht.

Die Nut 38 wird mittels eines Formgebungswerkzeugs spanlos in die Kolbenstange 22 eingebracht, nimmt die Kolbenstange 22 bei diesen spanlosen Fertigungsschritt eine von einer runden Form abweichende leicht ovale Form an, so stellt dies kein Problem dar, denn eine solche geringe Ovalität kann bei einem nachfolgenden Schleifvorgang, bei dem die Oberfläche der Kolbenstange 22 fein geschliffen wird, wieder egalisiert werden.

Hinsichtlich vorstehend im Einzelnen nicht näher erläuterter Merkmale der Erfindung wird in übrigen ausdrücklich auf die Patentansprüche und die Zeichnung verwiesen.

### Bezugszeichenliste

| | | | |
|---|---|---|---|
| 1 | Teleskopfedergabelbein | 32 | Dichtung |
| 2 | Innenrohr | 33 | Übergangsfläche |
| 3 | Außenrohr | 34 | Kontaktfläche |
| 4 | Dämpfungseinrichtung | 35 | Kontaktfläche |
| 5 | Federeinrichtung, Hauptfeder | 36 | Fläche |
| 6 | Gabelfaust | 37 | Aufnahme |
| 7 | Klemmfaust | 38 | Nut |
| 8 | Bohrung | 39 | Nutgrund |
| 9 | Ventilkörper | 40 | Bohrung |
| 10 | Teleskopfedergabel | | |
| 11 | Verschlussdeckel | | |
| 12 | Deckel | | |
| 13 | Ringscheibe | | |
| 14 | Dämpfungsrohr | | |
| 15 | Ringraumkammer | | |
| 16 | Dämpfungskolben, Kolben | | |
| 17 | untere Kolbenfläche | | |
| 18 | Ausnehmung | | |
| 19 | obere Kolbenfläche | | |
| 20 | Innenraum | | |
| 21 | erste Kammer, Federkammer | | |
| 22 | Kolbenstange | | |
| 23 | Dichtungseinrichtung | | |
| 24 | zweite Kammer | | |
| 25 | Dichtlippe | | |
| 26 | Führungsbuchse | | |
| 27 | Cartridge-Feder | | |
| 28 | Übergangsbereich | | |
| 29 | Durchmesserverringerung | | |
| 30 | Innenraum | | |
| 31 | Querbohrung | | |

## Patentansprüche

1. Teleskopfedergabelbein (1), mit einem Innenrohr (2) und einem Außenrohr (3) und einer Dämpfungseinrichtung (4) sowie einer Federeinrichtung (5), die innerhalb einer im Außenrohr (3) ausgebildeten ersten Kammer (21) angeordnet ist und sich gegenüber einer von der Dämpfungseinrichtung (4) gebildeten und unterhalb der ersten Kammer (21) angeordneten zweiten Kammer (24) abstützt, die zur Aufnahme eines Dämpfungsfluids ausgebildet ist, wobei die Dämpfungseinrichtung (4) einen sich an einer Kolbenstange (22) abstützenden Kolben (16) mit einer oberen und einer unteren Kolbenfläche (17; 19) besitzt und der Kolben (16) innerhalb eines weitgehend konzentrisch zum Innenrohr (2) angeordneten Dämpfungsrohrs (14) verlagerbar ist und das Dämpfungsrohr (14) von einer weitgehend konzentrisch zum Dämpfungsrohr (14) angeordneten Ringraumkammer (15) umgeben ist und eine entlang der Kolbenstange (22) verlagerbare Dichtungseinrichtung (23) zwischen der ersten und der zweiten Kammer (21; 24) vorgesehen ist, **dadurch gekennzeichnet, dass** die Kolbenstange (22) mit einem von der Dichtungseinrichtung (23) freigebbaren Fluidkanal zur fluidischen Verbindung der ersten und zweiten Kammer (21; 24) in einem von der Federeinrichtung (5) weitgehend unbelasteten Zustand der Dämpfungseinrichtung (4) versehen ist und der Fluidkanal in einem Übergangsbereich (28) zwischen einer Kontaktfläche (34) der Kolbenstange (22) mit der Dichtungseinrichtung (23), in der die fluidische Verbindung unterbrochen ist, und einer benachbarten Fläche (36) der Kolbenstange (22), in der die fluidische Verbindung freigegeben ist, mit einer Übergangsfläche (33) der Kolbenstange (22) versehen ist derart, dass sich eine entlang einer Innenumfangslinie der Dichtungseinrichtung (23) und der Übergangsfläche (33) ausgebildete Kontaktfläche (35) der Kolbenstange (22) bei einer Relativbewegung zwischen der Dichtungseinrichtung (23) und der Übergangsfläche (33) ohne Sprungfunktion ändert.

2. Teleskopfedergabelbein (1) nach Anspruch 1 , **dadurch gekennzeichnet, dass** der Fluidkanal derart ausgebildet ist, dass die fluidische Verbindung in einem weitgehend ausgefederten Zustand des Teleskopfedergabelbeins (1) herbei geführt ist.

3. Teleskopfedergabelbein (1) nach Anspruch 1 oder 2, **dadurch gekennzeichnet, dass** der Fluidkanal eine an der Kolbenstange (22) ausgebildete Durchmesserverringerung (29) ist, die von der Dichtungseinrichtung (23) freigebbar ist.

4. Teleskopfedergabelbein (1) nach Anspruch 1 oder 2, **dadurch gekennzeichnet, dass** der Fluidkanal eine sich in Längsrichtung der Kolbenstange (22) an deren Oberfläche erstreckende Nut ist, die an beiden Endbereichen eine Übergangsfläche aufweist.

5. Teleskopfedergabelbein (1) nach Anspruch 4, **dadurch gekennzeichnet, dass** die Übergangsfläche in einer Draufsichtansicht eine von in Längsrichtung der Kolbenstange verlaufenden Seitenlinien der Nut zu den Enden der Endbereiche winkelig zulaufende Konfiguration aufweist und in einer Längsschnittansicht eine von der Oberfläche der Kolbenstange zum Grund der Nut S-förmig geschwungene Konfiguration aufweist.

6. Teleskopfedergabelbein (1) nach einem der vorstehenden Ansprüche, **dadurch gekennzeichnet, dass** die Dichtungseinrichtung (23) eine umlaufende Dichtlippe (25) besitzt, die im Kontaktbereich mit dem Fluidkanal mit einer Beschichtung zur Verringerung des Reibungskoeffizienten zwischen Dichtlippe (25) und dem Fluidkanal ausgebildet ist.

7. Teleskopfedergabelbein (1) nach einem der vorstehenden Ansprüche, **dadurch gekennzeichnet, dass** die Dichtungseinrichtung (23) in einem Ringraum innerhalb eines die zweite Kammer (24) gegen die erste Kammer (21) abschließenden Deckels (12) unter Vorspannung angeordnet ist und der Deckel (12) an einem Außenumfangsbereich mit mindestens einer Dichtung (32) versehen ist, die an einer Innenumfangswand des Innenrohrs (2) anliegt.

8. Teleskopfedergabelbein (1) nach einem der vorstehenden Ansprüche, **dadurch gekennzeichnet, dass** die Dämpfungseinrichtung (4) in der zweiten Kammer (24) innerhalb eines Ölvolumens angeordnet ist derart, dass sich die Dichtungseinrichtung (23) im Ölvolumen befindet.

9. Teleskopfedergabelbein (1) nach einem der vorstehenden Ansprüche, **dadurch gekennzeichnet, dass** die Dichtungseinrichtung (23) an der Kolbenstange (22) angeordnet ist derart, dass die Dichtungseinrichtung (23) das am höchsten angeordnete Bauteil der Dämpfungseinrichtung (4) ist.

10. Teleskopfedergabel (10) mit zwei Teleskopfedergabelbeinen (1) nach einem der vorstehenden Ansprüche, wobei die Teleskopfedergabelbeine (1) derart angeordnet sind, dass die Dämpfungseinrichtung (4) jeweils unterhalb der die Federeinrichtung (5) aufnehmenden ersten Kammer (21) angeordnet ist.

## Claims

1. A telescopic suspension fork strut (1) with an inner tube (2) and an outer tube (3) and a damping device (4), also a spring device (5), which is arranged within a first chamber (21) formed in the outer tube (3) and is supported with respect to a second chamber (24) formed by the damping device (4) and arranged below the first chamber (21), which second chamber is formed to accommodate a damping fluid, wherein the damping device (4) possesses a piston (16), with an upper and a lower piston face (17, 19), which is supported on a piston rod (22), and the piston (16) can be displaced within a damping tube (14) arranged essentially concentrically with the inner tube (2), and the damping tube (14) is surrounded by an annular chamber (15) arranged essentially concentrically with the damping tube (14), and a sealing device (23) that can be displaced along the piston rod (22) is provided between the first and the second chambers (21, 24), **characterised in that**, the piston rod (22) is provided with a fluid passage that can be released by the sealing device (23) for the purpose of providing a fluid connection between the first and second chambers (21, 24) in a state of the damping device (4) in which it is essentially not under load by the spring device (5), and, in a transitional region (28) between a contact surface (34) of the piston rod (22) and the sealing device (23), in which the fluid connection is interrupted, and an adjacent surface (36) of the piston rod (22) in which the fluid connection is released, the fluid passage is provided with a transitional surface (33) of the piston rod (22) such that a contact surface (35) of the piston rod (22) formed along an inner peripheral line of the sealing device (23) and the transitional surface (33) alters with a relative movement between the sealing device (23) and the transition surface (33) without a step function.

2. The telescopic suspension fork strut (1) in accordance with Claim 1, **characterised in that**, the fluid passage is formed such that the fluid connection is brought about in an essentially extended state of the telescopic suspension fork strut (1).

3. The telescopic suspension fork strut (1) in accordance with Claim 1 or 2, **characterised in that**, the fluid passage is a diameter reduction (29) formed on the piston rod (22), which can be released by the sealing device (23).

4. The telescopic suspension fork strut (1) in accordance with Claim 1 or 2, **characterised in that**, the fluid passage is a groove on the surface of the piston rod (22) extending in the longitudinal direction of the latter, which groove has a transitional surface in both end regions.

5. The telescopic suspension fork strut (1) in accordance with Claim 4, **characterised in that**, the transitional surface in a plan view has a configuration running at an angle from lateral lines of the groove running in the longitudinal direction of the piston rod to the ends of the end regions, and in a longitudinal section view has a configuration curved in an S-shape from the surface of the piston rod to the base of the groove.

6. The telescopic suspension fork strut (1) in accordance with one of the preceding claims, **characterised in that**, the sealing device (23) possesses a peripheral sealing lip (25), which is formed in the contact region with the fluid passage with a coating for purposes of reducing the friction coefficient between the sealing lip (25) and the fluid passage.

7. The telescopic suspension fork strut (1) in accordance with one of the preceding claims, **characterised in that**, the sealing device (23) is arranged under preload in an annulus within a cover (12) closing the second chamber (24) with respect to the first chamber (21), and the cover (12) is provided on an outer peripheral region with at least one seal (32), which is located on an inner peripheral wall of the inner tube (2).

8. The telescopic suspension fork strut (1) in accordance with one of the preceding claims, **characterised in that**, the damping device (4) is arranged in the second chamber (24) within an oil volume such that the sealing device (23) is located in the oil volume.

9. The telescopic suspension fork strut (1) in accordance with one of the preceding claims, **characterised in that**, the sealing device (23) is arranged on the piston rod (22) such that the sealing device (23) is the component of the damping device (4) that is arranged uppermost.

10. A telescopic suspension fork (10) with two telescopic suspension fork struts (1) in accordance with one of the preceding claims, wherein the telescopic suspension fork struts (1) are arranged such that the damping device (4) is in each case arranged below the first chamber (21) accommodating the spring device (5).

## Revendications

1. Jambe de fourche à ressort télescopique (1), comportant un tube interne (2) et un tube externe (3) et un dispositif d'amortissement (4) ainsi qu'un dispositif de ressort (5), qui est disposé à l'intérieur d'une première chambre (21) réalisée dans le tube externe (3) et s'appuie contre une deuxième chambre (24) formée par le dispositif d'amortissement (4) et disposée en dessous de la première chambre (21), qui est conçue afin de recevoir le fluide d'amortissement, dans laquelle le dispositif d'amortissement (4) possède un piston (16) s'appuyant sur une tige de piston (22) par une surface de piston supérieure et inférieure (17 ;19) et le piston (16) est déplaçable à l'intérieur d'un tube d'amortissement (14) disposé essentiellement concentriquement à l'intérieur du tube interne (2), et le tube d'amortissement (14) est entouré par une chambre à espace annulaire (15) disposée essentiellement concentriquement au tube d'amortissement (14) et un dispositif d'étanchéité (23) déplaçable le long de la tige de piston (22) est prévu entre la première et la deuxième chambre (21 ;24), **caractérisé en ce que** la tige de piston (22) est pourvue d'un canal de fluide déblocable par le dispositif d'étanchéité (23) à des fins de liaison fluidique de la première et la deuxième chambre (21 ;24) dans un état essentiellement non chargé par le dispositif de ressort (5) du dispositif d'amortissement (4) et le canal de fluide est pourvu dans une zone de transition (28) entre une surface de contact (34) de la tige de piston (22) du dispositif d'étanchéité (23), dans laquelle la liaison fluidique est interrompue, et une surface adjacente (36) de la tige de piston (22), dans laquelle la liaison fluidique est débloquée, d'une surface de transition (33), de telle sorte que une surface de contact (35) de la tige de piston (22)réalisée le long d'une ligne circonférentielle intérieure du dispositif d'étanchéité (23) et de la surface de transition (33) varie en présence d'un mouvement relatif entre le dispositif d'étanchéité (23) et la surface de transition (33) sans fonction de saut.

2. Jambe de fourche à ressort télescopique (1) selon la revendication 1, **caractérisée en ce que** le canal de fluide est conçu de telle sorte que la liaison fluidique soit effectuée dans un état essentiellement détendu de la jambe de fourche à ressort télescopique (1).

3. Jambe de fourche à ressort télescopique (1) selon les revendications 1 ou 2, **caractérisée en ce que** le canal de fluide est une réduction de diamètre (29) réalisée sur la tige de piston (22), qui peut être débloquée par le dispositif d'étanchéité (23).

4. Jambe de fourche à ressort télescopique (1) selon la revendications 1 ou 2, **caractérisée en ce que** le canal de fluide est une rainure s'étendant dans la direction longitudinale de la tige de piston (22) sur la surface de celle-ci, qui présente aux deux zones d'extrémité une surface de transition.

5. Jambe de fourche à ressort télescopique (1) selon la revendication 4, **caractérisée en ce que** la surface de transition présente en vue de dessus une configuration s'étendant en formant un angle à partir des lignes latérales de la rainure s'étendant dans la direction longitudinale de la tige de piston jusqu'aux extrémités des zones d'extrémité et présente dans une vue en coupe longitudinale une configuration arquée en forme de S de la surface de la tige de piston jusqu'au fond de la rainure.

6. Jambe de fourche à ressort télescopique (1) selon une des revendications précédentes, **caractérisée en ce que** le dispositif d'étanchéité (23) possède une lèvre d'étanchéité circonférentielle (25), qui est réalisée dans la zone de contact avec le canal de fluide avec un revêtement pour diminuer les coefficients de friction entre la lèvre d'étanchéité (25) et le canal de fluide.

7. Jambe de fourche à ressort télescopique (1) selon une des revendications précédentes, **caractérisé en ce que** le dispositif d'étanchéité (23) est disposé dans un espace annulaire à l'intérieur d'un couvercle (12) isolant la deuxième chambre (24) par rapport à la première chambre (21) sous une précontrainte et le couvercle (12) est pourvu sur une zone de circonférence externe d'au moins un joint d'étanchéité (32), qui vient reposer sur une paroi circonférentielle intérieure du tube interne (2).

8. Jambe de fourche à ressort télescopique (1) selon une des revendications précédentes, **caractérisée en ce que** le dispositif d'amortissement (4) est disposé dans la deuxième chambre (24) à l'intérieur d'un volume d'huile de telle sorte que le dispositif d'étanchéité (23) se trouve dans le volume d'huile.

9. Jambe de fourche à ressort télescopique (1) selon une des revendications précédentes, **caractérisée en ce que** le dispositif d'étanchéité (23) est disposé sur la tige de piston (22) de telle sorte que le dispositif d'étanchéité (23) soit le composant placé le plus haut du dispositif d'étanchéité (4).

10. Fourche à ressort télescopique (10) comportant deux jambes de fourche à ressort télescopique (1) selon une des revendications précédentes, dans laquelle les jambes de fourche à ressort télescopique (1) sont disposées de telle sorte que le dispositif d'étanchéité (4) soit disposé respectivement en dessous de la première chambre (21) renfermant le dispositif à ressort (5).
